# EUROPÄISCHE PATENTANMELDUNG

(11) **EP 2 717 231 A1**
(43) Veröffentlichungstag der Anmeldung: **09.04.2014**
(21) Anmeldenummer: 12187083.6
(22) Anmeldetag: 03.10.2012
(51) Int. Cl.: G07B 15/02, G06Q 20/00

(54) **System zur Registrierung eines e-Tickets in einem Verkehrsmittel**

(71) Anmelder: Siemens Schweiz AG, 8047 Zürich (CH)
(72) Erfinder: Fischer, Michael, 8932 Mettmenstetten (CH)
(74) Vertreter: Fischer, Michael

(57) **Zusammenfassung**

Der vorliegenden Erfindung liegt die Aufgabe, ein System zur Erfassung eines e-Tickets in einem Verkehrsmittel anzugeben, das einen einfachen Aufbau aufweist und dabei so ausgeführt ist, dass die Fahrgastströme beim Aus- und Zusteigen nicht durch ein Einchecken und ein Auschecken verlangsamt werden.

Diese Aufgabe wird erfindungsgemäss durch ein System zur Registrierung eines e-Tickets in einem Verkehrsmittel gelöst, wobei das e-Ticket Sende-/Empfangsmittel für eine Kommunikation mit mindestens einer im Verkehrsmittel angeordneten Sende-/Empfangseinheit umfasst, und wobei mittels der Kommunikation das e-Ticket individualisierende Daten zur Registrierung der definierten Anwesenheit an der Sende-/Empfangseinheit lesbar sind. Essentiel ist dabei, dass die Sende-/Empfangseinheit eine verkehrsmittelseitige Erfassungszone abdeckt, bei deren Durchdringung die das e-Ticket individualisierenden Daten vom e-Ticket abgerufen und gelesen werden.

Die Erfindung ist daher unabhängig von der gewählten Datenkommunikation zwischen e-Ticket und der wenigstens einen in einem Verkehrsmittel angeordneten Sende-/Empfangseinheit. Insbesondere braucht das e-Ticket nicht für eine Datenkommunikation «geweckt» zu werden, sondern kann beispielsweise auch mit der in der Erfassungszone ausgestrahlten elektromagnetischen Leistung zum Aussenden der das e-Ticket individualisierenden Daten bewogen werden.

## Beschreibung

Die vorliegende Erfindung bezieht sich auf ein System zur Registrierung eines e-Tickets in einem Verkehrsmittel.

Die generelle Funktionalität und die Anforderungen an ein e-Ticketing-System in einem Fahrzeug des öffentlichen Verkehrs kann beispielsweise den in [1] und [2] angegebenen Quellen entnommen werden. Elektronische Billette bzw. elektronische Fahrscheine sind auch unter dem Begriff e-Tickets bekannt. Im Folgenden werden die vorgenannten zwei Begriffe kurz unter e-Ticket subsumiert. Ebenso werden Fahrzeuge des OeV - wie auch Kursschiffe - unter dem Begriff des (öffentlichen) Verkehrsmittels subsumiert.

Grundsätzlich werden im wesentlichen zwei verschiedene Ticketing-Systeme unterschieden:

CiCo Check-in/Check-Out
Ein Fahrgast hält bewusst beim Betreten und beim Verlassen des Verkehrsmittels bzw. des Bahnsteig-Bereichs sein Billett kurz vor eines der zum Abrechnungssystem gehörenden Lesegeräte, korrekterweise «Sende-/Empfangseinheiten». Die Abfrage des Billetts - im folgenden stets e-Ticket genannt - erfolgt durch eine Nahdistanz-Funkverbindung, wie z.B.
- Proximity, ISO/IEC 14443,
   Reichweite bis 10cm;
- Vicinity, ISO/IEC 15693, 13.56 MHz;
   Reichweite 1 bis 1.5m.

Das CiCo eignet sich besonders für in sich abgeschlossene U-Bahn- und Metro-System, bei die Fahrgastströme relativ einfach durch Eingangs- und Ausgangsbereiche mit entsprechenden Einzelzugangsschranken gelenkt werden können. Bei anderen System-Architekturen, wie mehrgleisigen Bahnhöfen, ist diese Fahrgaststromlenkung nicht möglich. Aus diesem Grund ist daher eine Erfassung der Fahrgäste erst im Verkehrsmittel möglich. Die Erfassung beim Ein- und Auschecken führt aber zu einer Verlangsamung der Ausstiegs- und Zustiegsströme, was im Besonderen bei zeitlich enggesteckten Fahrplänen in System mit hoher Zugdichte in nachteiliger Weise zu einer Destabilisierung des Fahrplans führt, und zwar besonders in den Zeitabschnitten der sogenannten Rush-Hour.

BiBo Be-in/Be Out
Demgegenüber ist es bei komfortableren Systemen nur noch nötig, dass der Fahrgast sein elektronisches Billett mit sich führt: Das Billett wird per Funk innerhalb der befahrenen Streckenabschnitte automatisch von den in dem Transportmitteln, z.B. Fahrgastraum im Bus, Sitzbereich in einem Eisenbahnwaggon, Sitzbereich auf einem Schiff, installierten Leseeinheiten erfasst und die so gewonnenen Daten einem automatischen Abrechnungssystem zugeführt. Eine Interaktion des Benutzers ist nicht mehr notwendig. Diese System braucht daher auch keinen Check-Out-Vorgang. Somit lässt sich der Fahrgastfluss erheblich beschleunigen, insbesondere beim gleichzeitigen Ein-/Aussteigen der Passagiere.

Aus der Schrift EP 1 201 693 B1 [3] sind ein Verfahren und ein System zur Erfassung von elektronischen Billette (e-Ticket) bekannt. Dem in der Schrift [3] offenbarten System liegt folgende Funktionalität zugrunde: Aus Gründen der Energieautonomie befinden sich die Billette in einem Schlafzustand. Beim Eintritt in ein Verkehrsmittel werden die E-Tickets durch ein Nahfeld, z.B. 6.78Mhz, geweckt und unidirektional mit einer ID sowie einer Timing Information «gestempelt». Die ID bezieht sich auf den im Eingangsbereich befindlichen Wecksender und die Timing Information auf Beginn und Intervall einer bidirektionalen Kommunikation zwischen e-Ticket und einer im Wagen befindlichen Sende- und Empfangseinheit. Durch das Protokoll können bei diesem System Fehlerfassung verhindert werden, so z.B.
- Parallelfahrt auf einem Velo oder durch Parallelfahrt zweier Züge
- Betrugsversuche durch temporäres Cachieren des E-Tickets in einem abschirmenden Behältnis, z.B. Alu-Koffer.

Das in EP 1 201 693 B1 [3] offenbarte System erlaubte die Detektion des Aufenthaltes beim Durchwandern eines Zuges mit der Granularität Waggon bzw. der Granularität Sende-/Empfangsbereich der in einem Transportmittel angeordneten Sende-/Empfangseinheit. Überlappungen sind dabei ausdrücklich möglich und erwünscht. Diese Überlappungen haben jedoch die Konsequenz, dass eine Zuordnung des Ortes eines E-Tickets zu einem bestimmten Ort innerhalb eines Verkehrsmittels nicht immer möglich ist, insbesondere dann, wenn in Doppelstockwaggons verschiedene Komfort- und damit auch Entgeltklassen angeboten werden.

Bei dem vorstehend genannten System war es ein Ziel, das e-Ticket in Form und Grösse einer Kreditkarte zu realisieren, damit dieses ähnlich wie die in der Schweiz übliche Karte eine Generalabonnements in einem Portemonnaie aufbewahrt werden konnte. Zugleich sollte die auf dem e-Ticket gespeicherte Energie für eine durchschnittliche Betriebszeit von drei Jahren ausreichen. Da dieses System jedoch nie über den Status von Versuchsprojekten mit Kartendicken von etwa 3 mm hinauskam, ist es daher fraglich, ob diese Randbedingungen besonders hinsichtlich der durchschnittlichen Betriebsdauer tatsächlich erreicht worden wären.

Aus diesen vorgenannten Gründen scheint derzeit ein gewisser Vorzug für entsprechende CiCo-System zu bestehen, weil auch die hierzu erforderliche Infrastruktur einfacher erstellt werden kann.

Der vorliegenden Erfindung liegt daher aber trotzdem die Aufgabe, ein System zur Erfassung eines e-Tickets in einem Verkehrsmittel anzugeben, das einen einfachen Aufbau aufweist und dabei so ausgeführt ist, dass die Fahrgastströme beim Aus- und Zusteigen nicht durch ein Einchecken und ein Auschecken verlangsamt werden.

Diese Aufgabe wird erfindungsgemäss durch ein System zur Registrierung eines e-Tickets in einem Verkehrsmittel gelöst, wobei das e-Ticket Sende-/Empfangsmittel für eine Kommunikation mit mindestens einer im Verkehrsmittel angeordneten Sende-/Empfangseinheit umfasst, und wobei mittels der Kommunikation das e-Ticket individualisierende Daten zur Registrierung der definierten Anwesenheit an der Sende-/Empfangseinheit lesbar sind. Essentiel ist dabei, dass die Sende-/Empfangseinheit eine verkehrsmittelseitige Erfassungszone abdeckt, bei deren Durchdringung die das e-Ticket individualisierenden Daten vom e-Ticket abgerufen und gelesen werden.

Die Erfindung ist daher unabhängig von der gewählten Datenkommunikation zwischen e-Ticket und der wenigstens einen in einem Verkehrsmittel angeordneten Sende-/Empfangseinheit. Insbesondere braucht das e-Ticket nicht für eine Datenkommunikation «geweckt» zu werden, sondern kann beispielsweise auch mit der in der Erfassungszone ausgestrahlten elektromagnetischen Leistung zum Aussenden der das e-Ticket individualisierenden Daten bewogen werden.

In einer vorteilhaften Ausgestaltung der vorliegenden Erfindung wird eine typische Eigenschaft der Struktur der Architektur von Verkehrsmitteln ausgenutzt. Im Detail verfügt ein Verkehrsmittel über mindestens einen Zu-/Ausstiegbereich, über mindestens einen Transferbereich und mindestens einen Aufenthaltsbereich. Dabei ist eine Verlangsamung der Passagierströme beim Zu-und Aussteigen besonders im Zu-/Ausstiegsbereich zu vermeiden. Der Transferbereich ist typischerweise zur Verbindung eines Zu-/Ausstiegsbereichs und eines Aufenthaltsbereichs vorgesehen und gangartig ausgestaltet und ist in der Regel auch sowohl gegenüber dem Zu-/Ausstiegsbereich als auch dem eigentlichen Aufenthaltsbereich (Fahrgastraum) verengt. Dies gilt besonders für Eisenbahnwaggons, wobei eben gerade der Eisenbahnverkehr sehr fahrplan-sensitiv ist. In dieser vorteilhaften Ausgestaltung der Erfindung ist es nun vorgesehen, die Erfassungszone im Transferbereich oder in einem Übergangsbereich vom Transferbereich zum Aufenthaltsbereich anzuordnen. Somit ist eine Erfassung der e-Ticket nicht direkt in dem sensitiven Zu-/Ausstiegsbereich vorgesehen, sondern in einem dem Durchgangsverkehr dienenden Bereich, der im besonderen beim Halt an Stationen zunächst vor dem Halt in der Station von den aussteigenden Passagieren und danach nach der Abfahrt von der Station von den eingestiegenen Passagieren durchquert wird. Die Erfassung in diesen Bereichen erfolgt daher in zeitlich entzerrter und deutlich über die reine Haltezeit ausgedehnter Zeitspanne. Eine Verlangsamung der Passagierströme wegen der Erfassung zum Ein- und Auschecken ist daher vermieden oder zumindest abgeschwächt, weil das Ein- und das Auschecken eben nicht wie bei einer Anordnung der Erfassungszone im Zu-/Ausstiegsbereich synchron stattfindet, sondern eben entzerrt. Kurz gesagt wird vor dem Halt in der Station ausgecheckt, nach der Abfahrt von der Station wird eingecheckt.

Um günstige Proximity oder Vicinity Technologie in der Erfassungszone einsetzen zu können, kann die Erfassungszone an einer querschnittsverengten Zone des Transferbereichs oder des Übergangsbereichs errichtet sein. Damit wird eine räumliche Weite der Erfassungszone fahrzeugbedingt definiert, die in der Regel aufgrund Spurweite oder Achsweite einen Meter nicht signifikant übersteigt, sondern eher darunter liegt.

In einer weiteren vorteilhaften Ausgestaltung der Erfindung kann es vorgesehen sein, die Erfassungszone mittels adaptiver Sendemittel als elektromagnetischen Vorhang auszugestalten. Mit dem Begriff des elektromagnetischen Vorhangs ist ein elektromagnetisches Feld gemeint, das räumliche eine klare Begrenzung auf die Erfassungszone aufweist. In einem Transferbereich eines Eisenbahnwaggons kann beispielsweise ein Gang betrachtet werden, dessen Querschnitt mit für das Abrufen der das e-Ticket individualierenden Daten -nachfolgend kurz ID-Daten genannt - ausreichender Feldstärke abgedeckt ist und dabei eine Ausdehnung in der Laufrichtung der Passagiere von etwa einem Meter aufweist. Auf diese Weise kann sichergestellt werden, dass die räumliche Ausdehnung der Erfassungszone relativ scharf begrenzt ist und so eine längerer Aufenthalt eines Passagiers in diesem Bereich eher ausgeschlossen ist. Bei einem CiCo-System ist diese Anforderung nicht ganz so stringent, weil die Erfassungszone eh auf den Proximity-Bereich beschränkt ist und der Passagier aktiv ein- und auschecken muss. Bei den Bibo-Systemen ist die Möglichkeit zu berücksichtigen, dass ein Passagier beispielsweise kurz vor dem Aussteigen im Transferbereich warten muss und sich daher auch für eine gewisse Zeit in einer Erfassungszone aufhält. Hier gibt es nun verschiedene Möglichkeiten der eindeutigen Erfassung. Entweder analysiert das Hintergrundsystem eine in einem engen Zeitabschnitt wiederkehrende Erfassung als eine Einchecken oder ein Auschecken oder das e-Ticket selbst ist so ertüchtigt, dass nach einmaliger oder zweimaliger Aussendung eine erneute Aussendung der ID-Daten für eine vorbestimmbare Zeitdauer unterdrückt.

In einer zweckmässigen Ausgestaltung der vorliegenden Erfindung kann das e-Ticket bei Anwendung einer Vicinity-Erfassung über ein aktives Sendemittel, insbesondere einen aktiven RFID-Tag, verfügen. Dabei ist die Erfassungszone dann als Vicinity-Zone ausgestaltet. Entsprechend kann das e-Ticket bei Anwendung einer Proximity-Erfassung über ein passives Sendemittel, insbesondere einen passiven RFID-Tag, verfügen. Dabei ist die Erfassungszone dann als Proximity-Zone ausgestaltet.

Bevorzugte Ausführungsbeispiele der vorliegenden Erfindung werden nachfolgend anhand der Zeichnung näher erläutert. Dabei zeigen:

Figur 1 in schematischer Darstellung eine Aufsicht auf einen Eisenbahnwaggon mit einem System zur Erfassung von e-Tickets;

Figur 2 in schematischer Darstellung einen vergrösserten Ausschnitt aus der Aufsicht gemäss Figur 1; und

Figur 3 in schematischer Darstellung ein e-Ticket im Datenaustausch mit einer Sende-/Empfangseinheit.

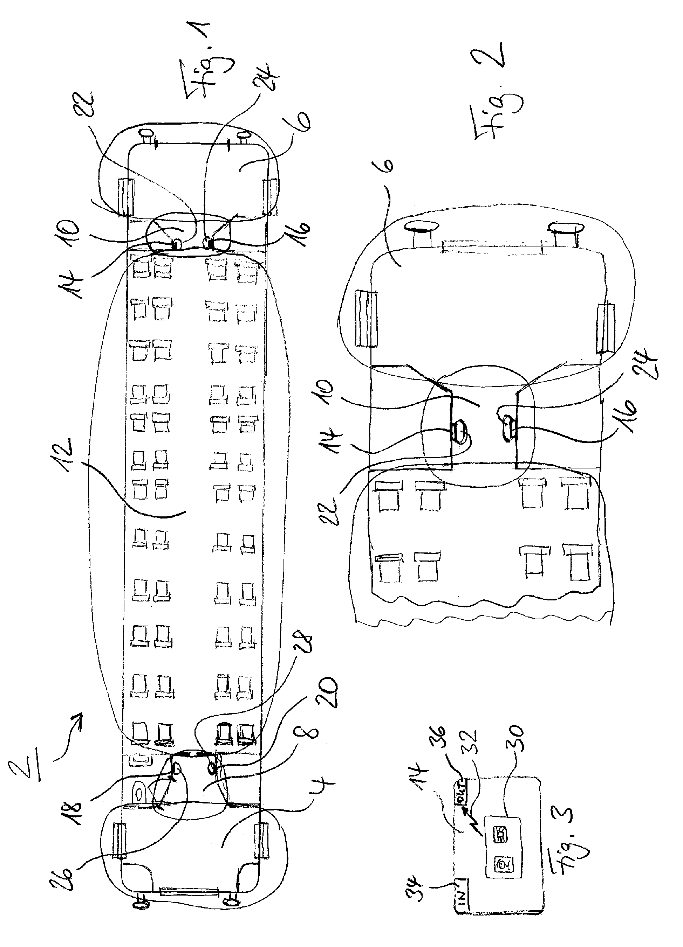

Die Figur 1 zeigt in schematischer Darstellung eine Aufsicht auf einen Eisenbahnwaggon 2. Typischerweise weist dieser Eisenbahnwaggon 2 zwei Zu-/Ausstiegsbereiche 4, 6, zwei Transferbereiche 8, 10 und einen Aufenthaltsbereich 12 auf. Ein System zur Registrierung eines e-Tickets 30 (vgl. Figur 3) in dem Eisenbahnwaggon 2 umfasst in den Transferbereichen 8, 10 angeordnete Sende-/Empfangseinheiten 14 bis 20, wobei mittels einer Kommunikation des e-Tickets mit jeweils einer Sende-/Empfangseinheit 14 bis 20 das e-Ticket individualisierende Daten zur Registrierung der definierten Anwesenheit an der Sende-/Empfangseinheit 14 bis 20 lesbar sind. Im vorliegenden Ausführungsbeispiel decken die Sende-/Empfangseinheiten 14 bis 20 jeweils eine Erfassungszone 22 bis 28 ab. Die Erfassungszonen 22 bis 28 sind für die Kommunikation im Proximity-Bereich vorgesehen. Mit anderen Worten heisst dies, dass ein Passagier sein e-Ticket (30) wie ein Badge aktiv ganz in die unmittelbare Nähe der Sende/Empfangseinheiten 14 bis 20 bringen muss, um die ID-Daten (durch drahtlose Kommunikation 32) durch die Sende/Empfangseinheiten 14 bis 20 lesen zu lassen. Die Durchdringung dieser Erfassungszonen 22 bis 28 mit dem e-Ticket 30 reicht daher aus, die ID-Daten vom e-Ticket 30 abzurufen und zu lesen. Um dem Passagier einen gelungenen Datentransfer und dessen Inhalt im Bezug auf seine Anwesenheit zu signalisieren, weisen die Sende/Empfangseinheiten 14 bis 20 neben einem akustischen Signal auch zwei optisch aufleuchtende Hinweisfelder aus, wie beispielsweise ein grünes Feld (34) mit der Aufschrift "IN" für den Zustand des korrekten Eincheckens und ein rotes Feld (36) mit der Aufschrift "OUT" für den Zustand des korrekten Auschecken auf. Selbst wenn der Passagier aufgrund der beengten Verhältnisse in den Transferbereichen 8, 10 zufällig mit seinem e-Ticket ein ungewolltes Auschecken auslösen würde, würde ihn die Sende/Empfangseinheit 14 bis 20 entsprechend darauf aufmerksam machen und ihm die Korrektur erlauben.

Da die Sende/Empfangseinheiten 14 bis 20 in den Transferbereichen 8, 10 angeordnet sind, wird ein Ein- und Auschecken der Fahrgäste direkt im Bereich der Türen vermieden, sodass die Fahrgäste sowohl ungehindert den Waggon 2 verlassen bzw. besteigen können. Auf diese Weise kommt es daher nicht zu einer Verlangsamung der Passagierströme in den Zu-/Ausstiegsbereichen 4, 6 und daher auch nicht zu einer ungewollten verspäteten Abfahrt eines Zuges aus einer Station. Hier sollte im Besonderen nicht vergessen werden, dass es eben bei sehr dichten Zugfolgen, wie im S-BahnVerkehr, durch unbeabsichtigte Verlängerungen der Haltezeiten ab einer Zeitdauer von etwa 30 Sekunden zu Störungen der Fahrplanstabilität kommen kann.

In hier nicht weiter dargestellter Weise sind die Transferbereiche bei Doppelstockzügen besonders die Auf- und Abgänge von dem ebenerdigen (im Bezug auf die Bahnsteigkante) Zu-/Ausstiegsbereich zu den Aufenthaltsbereichen. Hier ist es sinnvoll, die Sende/Empfangseinheiten im Endbereich des Treppenaufgangs und im Endbereich des Treppenabgangs (z.B. bei S-Bahnen der alten Bauart in der Schweiz) oder am Ende des Gangs zur unteren Aufenthaltsbereich anzuordnen, damit die Passagiere beim Einsteigen zunächst die Treppen ungehindert passieren und sich dann einchecken können und beim Aussteigen zunächst Auschecken und dann die Treppen ungehindert passieren können. Die Sende/Empfangseinheiten sind damit quasi in einem Übergangsbereich von dem Transferbereich zu dem Aufenthaltsbereich angeordnet.

Auf diese Weise sind die Sende/Empfangseinheiten wieder so weit wie möglich von den eigentlichen Türen entfernt, wodurch die dazwischen liegenden Bereiche, im Besonderen der Transferbereich und der Zu-/Ausstiegsbereich, als Pufferzonen für bereits ausgecheckte Passagiere (beim Aussteigen) und für noch nicht eingecheckte Passagiere (beim Zusteigen) dienen können. In den beiden Fallkonstellationen können einerseits die "gepufferten" Passagiere den Zug zügig verlassen bzw. andererseits beim Zusteigen in diesen bis zu den Sende-/Empfangseinheiten gepuffert werden, wobei der ständige Passagierdurchsatz an den Sende/Empfangseinheiten beim Aussteigen ein Nachrücken der Passagiere zulässt und beim Einsteigen eine Überfüllung der "Pufferzone" verhindert.

### Liste der zitierten Dokumente

[1] «E-Ticketing»
   Siemens Schweiz AG, Industry Sector, Mobility Division, Rail Automation
   www.litra.ch/download.php?file=dcs/users/2/3 20110316 M F dt.pdf
   und
   http://www.litra.ch/dcs/users/2/3 20110316 MF dt.pdf
[2] «Inhalt und Struktur der Spezifikationen/Kundenschnittstelle und Zertifizierung in der VDV-Kernapplikation» Präsentation von Dipl.-Ing. Elke Fischer
   VDV-KERNAPPLIKATIONS GmbH & Co. KG
   http://www.eticket-deutschland.de/
[3] EP 1 201 693 B1
   «Verfahren und System zur Registrierung von Billetten»

## Patentansprüche

1. System zur Registrierung eines e-Tickets (30) in einem Verkehrsmittel (2), wobei das e-Ticket (30) Sende-/Empfangsmittel für eine Kommunikation (32) mit mindestens einer im Verkehrsmittel (2) angeordneten Sende-/Empfangseinheit (14 bis 20) umfasst, wobei mittels der Kommunikation (32) das e-Ticket (30) individualisierende Daten zur Registrierung der definierten Anwesenheit an der Sende-/Empfangseinheit (14 bis 20) lesbar sind;
**dadurch gekennzeichnet, dass**
die Sende-/Empfangseinheit (14 bis 20) eine verkehrsmittelseitige Erfassungszone (22 bis 28) abdeckt, bei deren Durchdringung die das e-Ticket (30) individualisierenden Daten vom e-Ticket (30) abrufbar und lesbar sind.

2. System nach Anspruch 1,
**dadurch gekennzeichnet, dass**
das Verkehrsmittel (2) über mindestens einen Zu-/Ausstiegbereich (4, 6), über mindestens einen Transferbereich (8, 10) und mindestens einen Aufenthaltsbereich (12) verfügt, wobei ein Transferbereich (8, 10) zur Verbindung eines Zu-/Ausstiegsbereichs (4, 6) und eines Aufenthaltsbereichs (12) vorgesehen ist, und wobei die Erfassungszone (22 bis 28) im Transferbereich (8, 10) oder in einem Übergangsbereich vom Transferbereich (8, 10) zum Aufenthaltsbereich (12) angeordnet ist.

3. System nach Anspruch 1 oder 2,
**dadurch gekennzeichnet, dass**
die Erfassungszone (22 bis 28) an einer querschnittsverengten Zone des Transferbereichs (8, 10) oder des Übergangsbereichs errichtet ist.

4. System nach einem der vorangehenden Ansprüche,
**dadurch gekennzeichnet, dass**
die Erfassungszone (22 bis 28) mittels adaptiver Sendemittel als elektromagnetischer Vorhang ausgestaltet ist.

5. System nach einem der Ansprüche 1 bis 4,
**dadurch gekennzeichnet, dass**
das e-Ticket (30) über ein aktives Sendemittel, insbesondere einen aktiven RFID-Tag, verfügt.

6. System nach einem der Ansprüche 1 bis 4,
**dadurch gekennzeichnet, dass**
das e-Ticket (30) über ein passives Sendemittel, insbesondere einen passiven RFID-Tag, verfügt.

7. System nach einem der Ansprüche 1 bis 6,
**dadurch gekennzeichnet, dass**
die Erfassungszone (22 bis 28) als Proximity-Zone ausgestaltet ist.

8. System nach einem der Ansprüche 1 bis 6,
**dadurch gekennzeichnet, dass**
die Erfassungszone (22 bis 28) als Vicinity-Zone ausgestaltet ist.
